# EUROPEAN PATENT APPLICATION

(11) **EP 4 607 860 A1**
(43) Date of publication of application: **27.08.2025**
(21) Application number: 24159710.3
(22) Date of filing: 26.02.2024
(51) Int. Cl.: H04L 12/46, H04L 45/00, H04L 45/02, H04L 45/18, H04L 45/24, H04L 45/28, H04L 69/40, H04L 101/622

(54) **METHOD OF TRANSMITTING CONTROL FRAMES ACCORDING TO A REDUNDANCY PROTOCOL AND NETWORK DEVICE**

(71) Applicant: Siemens Aktiengesellschaft, 80333 München (DE)
(72) Inventor: Keskin, Faruk, 67065 Ludwigshafen am Rhein (DE); Meenakshi Sundaram, Singaravelan, 76187 Karlsruhe (DE); Ponnu, Selvamurugan, 76344 Eggenstein-Leopoldshafen (DE)
(74) Representative: Siemens Patent Attorneys

(57) **Abstract**

The invention relates to transmitting control frames according to a redundancy protocol, wherein the control frames are originally transmitted according to a first redundancy protocol which is employed for redundantly transmitting the control frames within a first network section (MRP1, MRP2, MRP3, MRP4, RSTP1, RSTP2). The control frames are transmitted between a first endpoint and a second endpoint via a second network section (HSR1) in which a second redundancy protocol is employed. The first endpoint and the second endpoint interface the first network section (MRP1, MRP2, MRP3, MRP4, RSTP1, RSTP2) and the second network section (HSR1). The first endpoint and the second endpoint are both associated with a unique interconnection identifier. When receiving and detecting, at one of the endpoints, a control frame received from the first network section and associated with the first redundancy protocol, a detecting endpoint device (201-206, 209-210) comprising the receiving endpoint assigns a destination address from a selected address range for forwarding the detected control frame through the second network section (HSR1). The destination address is associated with the interconnection identifier, wherein the selected address range is defined as reserved address range in the second redundancy protocol. The detected control frame is forwarded through the second network section (HSR1) by means of the destination address assigned by the detecting endpoint device (201-206, 209-210).

## Description

The present invention relates to a method of transmitting control frames according to a redundancy protocol, in particular within a communication network of an industrial automation system, and a network device for transmitting control frames according to a redundancy protocol.

Industrial automation systems are designed to monitor and control technical processes, particularly for factory, process or building automation, and provide for operating control devices, sensors, machines, and industrial plants autonomously and substantially independent from human intervention. Usually, industrial automation systems comprise a plurality of automation devices interconnected with each other via an industrial communication network. Due to a continuously growing impact of information technology on industrial automation systems, approaches for reliably providing monitoring and control functions within industrial automation systems gain increasing importance. Challenges experienced in industrial automation systems frequently result from message traffic with a large number of messages which are relatively short.

Generally, interruptions of communication connections might cause an unfavourable repetition of transmission of messages. Again, this usually results in additional loads on communication connections, which may further lead to malfunctions or system faults. If messages are not transmitted at all or not transmitted completely, an industrial automation system may be prevented from changing into a safe operating state or from remaining in such a safe operating state. Finally, this may lead to a costly outage of an entire production system.

In EP 3 881 506 B1, a method for operating a communication system having redundant routers is described, wherein datagrams are forwarded within the communication system from source communication devices to destination communication devices by routers on the basis of routing information stored in routing tables of the routers.

According to EP 3 881 506 B1, within a communication system having redundant routers, datagrams are forwarded from source communication devices to target communication devices by means of routers based on routing information stored in routing tables of the routers. For each end device, a virtual router is configured as a default gateway. The virtual router is associated with a group of several routers. Routers from the same group select among themselves a router operated as the active default gateway. The routers not operated as the active default gateway are operated as reserve gateways. The reserve gateways request from the active default gateway a transmission of stored address associations between data link layer addresses and network layer addresses of all detected communication devices. Only upon request, the active default gateway transmits all stored address associations in bundled form to a requesting reserve gateway. The reserve gateways update their respective configuration based on the address associations transmitted by the active default gateway directly and without waiting for results from a training process carried out by themselves. In case of a failure of the active default gateway and selecting a new active default gateway, the new active default gateway takes over all address associations transmitted before the failure and a virtual data link layer address assigned to the virtual router for its operation as new active default gateway.

EP4283925A1 relates to a secure transmission of time-critical data within a communication system, which comprises several local networks, in which data is transmitted by means of switching, and an overlay network, in which data is transmitted by means of routing. A gateway system is provided for connecting the communication system to at least one unsecured external network. Network layer communication over the overlay network is only authorized between authenticated system components. Switches authenticate connected end devices and assign them to a physical or logical local network according to a respective end device identity. Data link layer communication is implicitly authorized within the local networks based on an assignment of the respective end devices to the same local network. Communication at OSI layer 3-7 between end devices on different local networks or with end devices in the unsecured external network is authorized using zero trust proxies, each of which is assigned to a local network.

In the older European patent application with the application number 23159159.5, a method is described for highly available data transmission within a communication system that includes a first and a second network segment, which are redundantly connected by at least a first and a second link. Messages with payload data are transmitted within the first network segment according to a spanning tree protocol. Within the first network segment, messages with topology information are forwarded, which are also forwarded over the links and within the second network segment. In an error-free state, data transmission between the two network segments only happens through a first coupling device of the first network segment and the first link. A coupling port of a second coupling device is put into an edge port mode when topology information received via the second link is absent. Devices of the second network segment delete their respective MAC address tables upon receiving topology information forwarded via the coupling port of the second coupling device.

The present invention is based on the problem of realizing a reliable and deterministic method for interconnecting network sections in which different redundancy protocols are employed and for providing appropriate means for implementing the method.

This problem is solved according to the present invention by means of a method having the features specified in claim 1 and by means of a network device having the features specified in claim 15. Advantageous embodiments of the present invention are specified in the dependent patent claims.

According to the present invention, a method of transmitting control frames according to a redundancy protocol is provided. The control frames are originally transmitted according to a first redundancy protocol which is employed for redundantly transmitting the control frames within a first network section. Preferably, the control frames are MRP (Media Redundancy Protocol) control frames or spanning tree Bridge Protocol Data Units (BPDUs).

The method according to the present invention comprises transmitting the control frames between a first endpoint and a second endpoint via a second network section in which a second redundancy protocol is employed. The first endpoint and the second endpoint interface the first network section and the second network section. Moreover, the first endpoint and the second endpoint are both associated with a unique interconnection identifier, e.g., a tunnel ID. Preferably, the first redundancy protocol may be a media redundancy protocol, e.g. MRP, or a spanning tree protocol, e.g. STP (Spanning Tree Protocol), RSTP (Rapid Spanning Tree Protocol), or MSTP (Multiple Spanning Tree Protocol), whereas the second redundancy protocol may be a seamless ring redundancy protocol, e.g. HSR (High-availability Seamless Redundancy), a parallel redundancy protocol, e.g. PRP (Parallel Redundancy Protocol), or a protocol for redundantly transmitting streams, e.g. FRER (Frame Replication and Elimination for Reliability).

Further, according to the present invention, when receiving and detecting, at one of the endpoints, a control frame received from the first network section and associated with the first redundancy protocol, a detecting endpoint device comprising the receiving endpoint assigns a destination address from a selected address range for forwarding the detected control frame through the second network section, wherein the destination address is associated with the interconnection identifier. The selected address range is defined as reserved address range in the second redundancy protocol. The detected control frame is forwarded through the second network section by means of the destination address assigned by the detecting endpoint device. According to a preferred embodiment of the present invention, the selected address range, from which the destination address is chosen by the detecting endpoint device, is reserved for monitoring purposes according to the second redundancy protocol. Advantageously, the first endpoint and the second endpoint are each associated with an interlink port of an HSR or PRP network device, particularly an HSR/PRP RedBox. Especially, control frames from the first network section can be transparently tunneled through the second network section via the interlink ports. Thus, control protocol frames received on an interlink port of an HSR/PRP device can be transparently tunneled over an HSR ring or a PRP network and transmitted again as native frame via an interlink port of another HSR/PRP device connected to the HSR ring or PRP network. Thus, the interlink ports will not directly participate in operating the first redundancy protocol.

By means of a defined mapping between interconnection identifier and destination address, control frames to be transferred via a transit network section can be quickly and safely transmitted outside their originating network section regardless of the redundancy protocol used in the respective network section. Preferably, the detecting endpoint device assigns the destination address to comprise a portion indicative of the interconnection identifier. Thus, a seamless expansion of network sections across transit networks can be realized while maintaining a consistent segregation between the respective redundancy protocols. Especially when choosing a selected address range for the destination address that is reserved for monitoring purposes according to the second redundancy protocol, tunneled control frames do not interfere in the transit network section with local data traffic and can be reliably phased out by an egress endpoint. For a seamless and deterministic transfer of control frames via the second network section, source address tables associated with the first endpoint and the second endpoint are advantageously deleted or updated by means of topology change notifications from the first network segment.

According to yet another preferred embodiment of the present invention, the interconnection identifier and/or the assigned destination address are/is used for encoding and decoding the control frame when being forwarded through the second network section. Particularly, the control frame is encoded by the detecting endpoint device before being forwarded through the second network section, and wherein the control frame is decoded by an endpoint device comprising the other of the first and the second endpoint after being forwarded through the second network section.

Additionally, or alternatively, the detecting endpoint device can encapsulate the control frame in a tunneling frame transmitted via the second network section. In this case, an endpoint device comprising the other of the first and the second endpoint decapsulates the control frame from the tunneling frame. Particularly, the first endpoint and the second endpoint constitute tunnel endpoints of a data link layer tunnel established via the second network section. Encapsulating and decapsulating the control frame is preferably hardware-implemented by means of endpoint devices comprising the first endpoint or the second endpoint, respectively. Moreover, the tunneling frame may be a VXLAN frame or a data frame for OSI Layer 2 tunneling of data frames. Thus, deterministic tunneling of control frames via the second network section is achieved.

According to yet another advantageous embodiment of the present invention, the detecting endpoint device assigns the destination address to comprise a portion indicative of a specific type of the first redundancy protocol. Particularly, an encoded or encapsulated control frame received by one of the first and the second endpoint via the second network section can be selected for decoding or decapsulating based on the first redundancy protocol indicated by the destination address. By doing so, a tunneling can be achieved without deep packet inspection of the control frames.

According to another aspect of the present invention, a network device for executing a method described above is provided. The network device is designed for transmitting control frames according to a redundancy protocol and is configured to comprise a first endpoint or a second endpoint interfacing a first network section and a second network section and being associated with a unique interconnection identifier. The control frames are originally transmitted according to a first redundancy protocol which is employed for redundantly transmitting the control frames within the first network section. The control frames are transmitted between the first endpoint and the second endpoint via the second network section in which a second redundancy protocol is employed.

The network device according to the present invention is further configured to receive and detect, at one of the endpoints, a control frame received from the first network section and associated with the first redundancy protocol, and to assign a destination address from a selected address range for forwarding the detected control frame through the second network section, wherein the destination address is associated with the interconnection identifier, and wherein the selected address range is defined as reserved address range in the second redundancy protocol. Moreover, the network device is configured to forward the detected control frame through the second network section by means of the assigned destination address. Preferably, the network device comprises a switch functionality and/or HSR/PRP RedBox functionality.

The present invention will be explained in more detail with reference to exemplary embodiments illustrated in the attached drawing, in which
- Figure 1: shows a communication system comprising a plurality of network sections in which different redundancy protocols are employed,
- Figure 2: shows the communication system according to Figure 1 after occurrence of a topology change in a first network section,

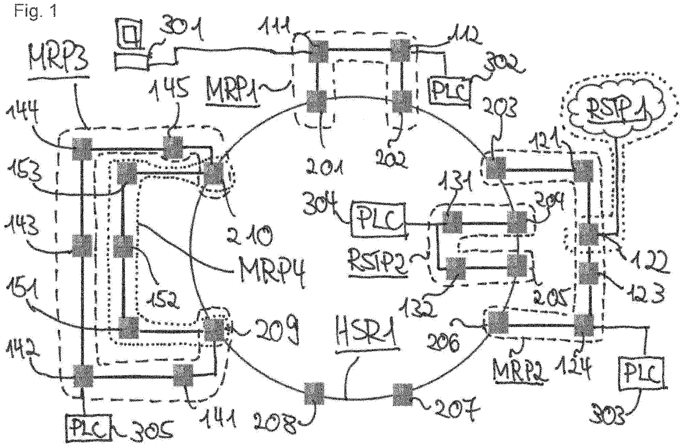

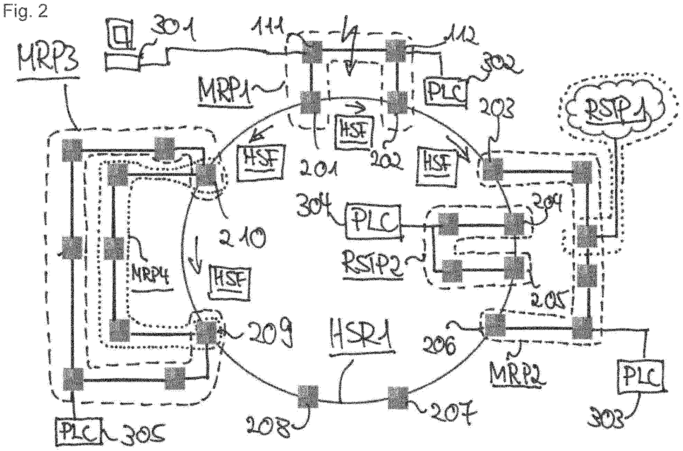

- Figure 2: shows the communication system according to Figure 1 when forwarding MRP test frames from a first network section to a second network section.

The communication system shown in Figure 1 comprises a plurality of network devices 111-112, 121-124, 131-132, 141-145, 151-153, 201-210, such as switches, routers or firewalls, and automation devices 301-305, such as programmable logic controllers, or a monitoring and control station. Each of the network devices 111-112, 121-124, 131-132, 141-145, 151-153, 201-210, is designed to forward datagrams within the industrial automation network, especially between programmable logic controllers 302-305, IO modules (input/output) or a monitoring and control station 301 and may be assigned to a network controller controlling forwarding functions of assigned network devices. Particularly, the network devices 111-112, 121-124, 131-132, 141-145, 151-153, 201-210 are designed for transmitting control frames according to a redundancy protocol. These control frames may be e.g., MRP control frames (Media Redundancy Protocol) or spanning tree Bridge Protocol Data Units (BPDUs).

Typically, the programmable logic controllers 302-305 each comprise a communication module, a central processing unit and at least one internal or peripheral IO module. By means of a communication module, a programmable logic controller can be connected to a switch, to a router or to a fieldbus system. Thus, the programmable logic controllers 302-305 constitute network devices, particularly end devices, as well. The programmable logic controllers 302-305 can also be referred to by names such as Intelligent Electronic Device or Merging Unit.

IO modules are used for exchanging actuating variables and measured values between the programmable logic controllers 302-305 and machines or devices controlled by means of a programmable logic controller. Interfaces between the programmable logic controllers 302-305 and the machines or devices can be analogue or digital. The central processing units of the programmable logic controllers 302-305 are designed and configured particularly for determining actuating variables from measured values and for issuing control commands. Preferably, above components of a programmable logic control are connected to each another via a backplane bus system. In industrial automation systems and electric power systems, automation or field devices may also be implemented by sensors or sampling units, e.g. attached to high voltage lines, with reduced complexity or simple electronic circuitry. Such devices typically exchange information via their assigned controllers.

The communication modules each comprise a transmitting and receiving unit implemented by means of a PHY circuit and a functional unit which is implemented by means of a MAC circuit and is intended to control access to a communication medium. The communication modules access their communication network adapters via interface drivers as hardware abstraction elements.

The monitoring and control station 301 is used for visualizing process control data, actuating variables and measured values which are processed or collected, respectively by programmable logic controllers, IO modules and sensors. Particularly, in the present embodiment the monitoring and control station 301 comprises at least a graphical user interface, an input device, a processor, and a communication module. Accordingly, also the monitoring and control station 301 constitutes a network device.

According to the embodiment illustrated in Figure 1, the communication system comprises a plurality of first network sections MRP1, MPR2, MRP3, MRP4, RSTP1, RSTP2 in which the control frames are originally transmitted according to a first redundancy protocol. In case of the first network sections MRP1, MPR2, MRP3, MRP4, the first redundancy protocol is MRP, whereas the first redundancy protocol is RSTP (Rapid Spanning Tree Protocol) for the first network sections RSTP1 and RSTP2. Between a respective first and second endpoint device 201/202, 203/206, 204/205, 209/210, the control frames are transmitted via a second network section HSR1 in which a second redundancy protocol is employed being different from above first redundancy protocols. The first endpoint devices 201, 203, 204, 209 and the second endpoint devices 202, 206, 205, 210 interface the respective first network section MRP1, MPR2, MRP3, MRP4, RSTP1, RSTP2 and the second network section HSR1. Additionally, the second network section HSR1 comprises two network devices 207-208 not serving as endpoint devices.

In Figure 1, the first network section MRP1 comprises the network devices 111-112 and the endpoint devices 201, 202, whereas the first network section MRP2 comprises the network devices 121-124 and the endpoint devices 203, 206. Further, the first network section MRP3 comprises the network devices 141-144 and the endpoint devices 209, 210, whereas the first network section MRP4 comprises the network devices 151-153 and shares the endpoint devices 209, 210 with the first network section MRP3. Moreover, the first network section RSTP1 is connected to the second network section HSR1 via the network device 122 and the first network section MRP2, wherein the network device 122 has both MRP and eRSTP functionality (enhanced Rapid Spanning Tree Protocol) allowing to couple an RSTP network segment to a MRP network segment. Thus, the first network section RSTP1 uses the endpoint devices 203, 206 of the first network section MRP2 for interfacing with the second network section HSR1. Finally, the first network section RSTP2 comprises the network devices 131-132 and the endpoint devices 204, 205.

The present invention is not limited to the combination of redundancy protocols shown in the embodiment illustrated by Figure 1. Generally, the first redundancy protocol may be e.g., MRP, STP (Spanning Tree Protocol), RSTP, or MSTP (Multiple Spanning Tree Protocol), while the second redundancy protocol may be e.g., HSR, PRP (Parallel Redundancy Protocol), or FRER (Frame Replication and Elimination for Reliability). According to a preferred embodiment, the first and second endpoint devices 201/202, 203/206, 204/205, 209/210 are HSR/PRP RedBoxes and each comprise at least one interlink port which is associated with a first or second endpoint. Via the respective interlink port, control frames from the respective first network section MRP1, MPR2, MRP3, MRP4, RSTP1, RSTP2 are transparently tunneled though the second network section HSR1. For simplicity reasons, the interlink ports of the endpoint devices 201/202, 203/206, 204/205, 209/210 are not explicitly depicted in Figure 1.

Each pair of endpoints or interlink ports, respectively is associated with a unique interconnection identifier, e.g. a tunnel ID. According to the present embodiment shown in Figure 1, the interlink ports of the endpoint devices 201, 202 are associated with tunnel ID 1 for tunneling control frames originating from the first network section MRP1, whereas the interlink ports of the endpoint devices 203, 206 are associated with tunnel ID 2 for tunneling control frames originating from the first network section MRP2. For coupling the two first network sections MRP3 and MRP4 to the second network section HSR1, the shared endpoint devices 209, 210 each have two interlink ports which are associated with one of the two first network sections MRP3, MRP4 exclusively. Thus, a first pair of interlink ports of the endpoint devices 209, 210 is associated with tunnel ID 3 for tunneling control frames originating from the first network section MRP3, whereas a second pair of interlink ports of the endpoint devices 209, 210 is associated with tunnel ID 4 for tunneling control frames originating from the first network section MRP4. Moreover, the interlink ports of the endpoint devices 204, 205 are associated with tunnel ID 5 for tunneling control frames originating from the first network section RSTP2.

The present invention is not limited to linking a plurality of MRP network sections to an HSR network section via shared endpoint devices. Particularly, this is also possible for a plurality of RSTP network sections or an arbitrary mix of MRP and RSTP network sections which can be linked to an HSR, PRP or FRER network section via shared endpoint devices accordingly. By assigning the unique tunnel IDs, each of the first network sections MRP1, MRP2, MRP3, MRP4, RSTP1, RSTP2 can operate independently over the second network section HSR1 without interfering with each other. Especially, the endpoint devices will only encode or decode data traffic comprising a tunnel ID matching with a tunnel ID assigned to one of their interlink ports. Other network devices in the second network section just switch the data traffic. Generally, as can be taken from Figure 1, a pair of endpoint devices assigned to the same first network section does not have to be located adjacently in the section network section. For example, according to the present embodiment, the endpoint devices 203, 206 associated with the first network section MRP2 are not adjacent to each other in the second network section HSR1.

When a control frame from one of the first network sections MRP1, MRP2, MRP3, MRP4, RSTP1, RSTP2 and associated with one of the first redundancy protocols is received and detected at an interlink port of one of the endpoint devices 201/202, 203/206, 204/205, 209/210, a detecting endpoint device comprising the interlink port at which the control frame has been received assigns a destination address from a selected address range for forwarding the detected control frame through the second network section HSR1. The destination address is associated with the tunnel ID assigned to the interlink port at which the control frame has been received. Preferably, the detecting endpoint device assigns the destination address to comprise a portion indicative of the respective tunnel ID. Advantageously, the detecting endpoint device assigns the destination address to also comprise a portion indicative of a specific type of the respective first redundancy protocol. Based on this information, an encoded or encapsulated control frame received from the second network section HSR1 at an interlink port of one of the endpoint devices 201/202, 203/206, 204/205, 209/210 can be selected for decoding or decapsulating easily, quickly, and safely.

The selected address range, from which the destination address is chosen by the detecting endpoint device, is defined as reserved address range in the second redundancy protocol. According to the present embodiment, the selected address range is reserved for monitoring purposes according to the second redundancy protocol. Particularly, the destination address used for tunneling will be an HSR Supervision reserved MAC address in the address range 01-15-4E-00-01-01 to 01-15-4E-00-01-fe. For example, the following address ranges may be used depending on the respective tunnel ID x and the respective first redundancy protocol:
- 01-15-4E-00-01-x1 as destination MAC address for tunneling RSTP BPDUs,
- 01-15-4E-00-01-x2 to 01-15-4E-00-01-x4 as destination MAC address for tunneling MRP control frames.
The MAC address range 01-15-4E-00-01-x5 to 01-15-4E-00-01-xe may be reserved for further enhancements.

In general, the detected control frame is forwarded through the second network section HSR1 by means of the destination address assigned by the detecting endpoint device. Preferably, the interlink port at which the control frame has been received not directly participate in operating the respective first redundancy protocol operation (here: MRP or RSTP). Instead, it will transparently tunnel the control frames into the second network section HSR1. Preferably, the tunnel ID and the assigned destination address are used for encoding and decoding control frames when being forwarded through the second network section HSR1. Especially, control frames are encoded by the respective detecting endpoint device before being forwarded through the second network section HSR1. Accordingly, control frames are decoded after being forwarded through the second network section HSR1 by an endpoint device paired with the detecting endpoint device.

Referring to Figure 1, the endpoint devices 201, 202 for coupling network section MRP1 with network section HSR1 and having interlink ports configured with tunnel ID 1 will perform as described hereinafter. If a tunneled control frame directed to a destination MAC address, such as 01-15-4E-00-01-x2 to 01-15-4E-00-01-x4, is received by one of the endpoint devices 201, 202, then it will be converted to a native MRP control frame and transmitted to the network section MRP1 by the respective endpoint device 201, 202 via its interlink port associated with tunnel ID 1. Accordingly, if a tunneled control frame directed to a destination MAC address, such as 01-15-4E-00-01-x1, is received by one of the endpoint devices 204, 205 and comprises the tunnel ID 5, then it will be converted to a native RSTP BPDU control frame and transmitted to the network section RSTP2 by the respective endpoint device 204, 205 via its interlink port associated with tunnel ID 5. Particularly, due to above predetermined one-to-one mapping of the protocols to destination MAC addresses, tunneling of the control frames can be achieved without deep packet inspection of these control frames.

According to an alternative embodiment, instead of encoding, the respective detecting endpoint device encapsulates control frames in tunneling frames transmitted via the second network section HSR1. Instead of decoding, an endpoint device paired with the detecting endpoint device decapsulates the control frames from the tunneling frames. Particularly, the interlink ports of the paired endpoint devices constitute tunnel endpoints of a data link layer tunnel established via the second network section HSR1. Preferably, encapsulating and decapsulating the control frame is hardware-implemented by means of the endpoint devices comprising the interlink ports associated with above tunnel endpoints. Advantageously, the tunneling frames are VXLAN frames or data frames for OSI Layer 2 tunneling of data frames.

In case of network devices being migrated from one first network segment MRP1, MRP2, MRP3, MRP4, RSTP1, RSTP2 to another first network segment, it is sufficient to perform a source node movement detection and an associated flush of source address tables in the respective pair of endpoint devices 201/202, 203/206, 204/205, 209/210. Preferably, source address tables associated with the interlink ports of the endpoint devices 201/202, 203/206, 204/205, 209/210 are deleted or updated, respectively by means of topology change notifications from the respective first network segment.

Diagnostic frames with above destination MAC addresses can be used as supervision frames for periodic status checks of paired endpoint devices 201/202, 203/206, 204/205, 209/210. If these checks indicate a use of a tunnel ID by more than two endpoint devices, then e.g., an alarm may be signaled, or tunneling frames comprising the respective tunnel ID may be suspended. Further, the affected interlink ports may remain in blocking state, i.e. only forward or respond to supervision frames, unless a fault clearance is achieved.

Although the embodiment illustrated in Figure 1 focusses on tunneling MRP and RSTP over an HSR ring, the present invention is applicable to other redundancy protocols and combinations thereof. Particularly, the present inventions can also be used in scenarios with more than two endpoint devices or gateways, respectively assigned to a tunnel through a transit network section. Thus, focusing on two paired endpoint devices in the illustrated embodiment is done for an easier to understand explanation how to apply the present invention.

According to an advantageous further embodiment, source address tables associated with the interlink ports of the endpoint devices 201/202, 203/206, 204/205, 209/210 may be deleted or updated, respectively by additional means than topology change notifications from the first network segments MRP1, MRP2, MRP3, MRP4, RSTP1, RSTP2. Preferably, whenever source MAC addresses learnt on an interlink port of one of the endpoint devices 201/202, 203/206, 204/205, 209/210 are flushed or deleted, then a single HSR Supervision frame HSF with custom MAC logic will be generated by the respective endpoint device as shown in Figure 2. All HSR network devices 201-210 within the second network section HSR1 will receive the HSR Supervision frame HSF. On receiving the HSR Supervision frame, the HSR network devices 201-210 will immediately clear learnt source MAC addresses from their source address tables. This will also affect source MAC addresses learnt by HSR network devices 201-210 on their LRE (Link Redundancy Entity) interfaces which will be cleared accordingly. After this, data traffic will resume with the regular VLAN flooding logic until updated source MAC addresses are learned via the LRE interfaces.

Considering a scenario in which the source MAC address of the monitoring and control station 301 has been initially learnt over the interlink port of the endpoint device 202, the endpoint device 202 will advertise the learnt source MAC address of the monitoring and control station 301 in an HSR Supervision frame HSF to all the other HSR network devices 201, 203-210. By doing so, e.g. data traffic from the programmable logic controller 305 to the monitoring and control station 301 will take a logic path via at least one of the endpoint devices 209, 210, via the second network section HSR1, and via the endpoint device 202. Upon occurrence of a topology change in the first network section MRP1, e.g. due to a link down between the network devices 111-112 as shown in Figure 2, the source MAC address of the monitoring and control station 301 is assumed to have been initially learnt over the interlink port of the endpoint device 201. Accordingly, the endpoint device 201 will send an HSR Supervision frame HSF to all the other HSR network devices 202-210 to advertise the source MAC address of the monitoring and control station 301 to have been recently learnt over the interlink port of the endpoint device 201. Upon reception of this HSR Supervision frame HSF, all HSR network devices 201-210 will clear their source address tables. After the data traffic has resumed, the updated source MAC addresses are learned via the LRE interfaces which also comprises the source MAC address of the monitoring and control station 301 which has been learnt on the interlink port of the endpoint device 201. This triggers a change in the logic path from the programmable logic controller 305 to the monitoring and control station 301 which now comprises at least one of the endpoint devices 209, 210, the second network section HSR1, and the endpoint device 201. This process will take less than a second and is much faster than a MAC address age out process which typically takes about 60 seconds. Therefore, traffic loss can be reduced accordingly by means of the process explained above.

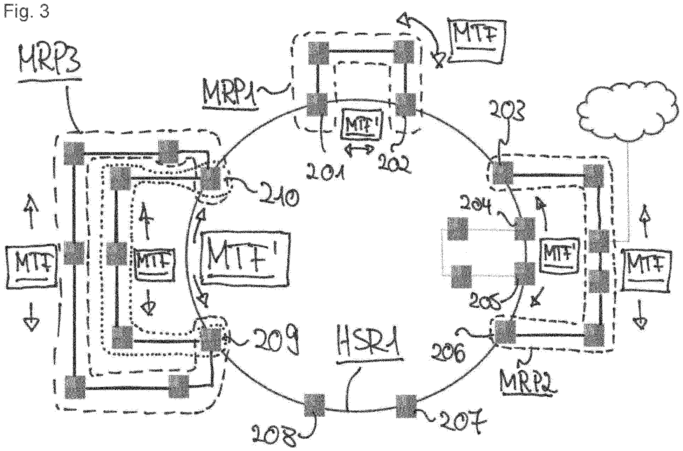

Whereas the HSR protocol employs frame duplication to be robust against network failures, the MRP protocol uses MRP test frames MTF to coordinate MRP node states as shown in Figure 3, particularly to ensure connectivity for all MRP nodes and to avoid loops in a MRP network section. Therefore, the endpoint devices 201/202, 203/206, 209/210 coupling MRP network sections MRP1, MRP2, MRP3, MRP4 to an HSR network section HSR1 are preferably configured to processes MRP test frames MTF when needed while also not self-injecting any MRP test frames MTF actively and uncontrolled in the HSR network section HSR1. Particularly, the endpoint devices 201/202, 203/206, 209/210 substitute destination MAC addresses of the MRP test frames MTF by HSR Supervision reserved MAC addresses, e.g., 01-15-4E-00-01-FF, or 01-15-4E-00-01-E0 to 01-15-4E-00-01-EF, when receiving MRP test frames MTF via an interlink port and forwarding accordingly modified MRP test frames MTF' to the HSR network section HSR1. Consequently, when forwarding modified MRP test frames MTF' back to the respective MRP network section MRP1, MRP2, MRP3, MRP4, the endpoint devices 201/202, 203/206, 209/210 convert the HSR Supervision reserved MAC addresses back to the original destination MAC addresses of the MRP test frames.

According to yet another further embodiment, to make (R)STP Passive Listening interoperable with an HSR network section to which an RSTP or STP network section is coupled, destination MAC addresses of (R)STP BPDUs are preferably substituted by HSR Supervision reserved MAC addresses, like above procedure for substituting destination MAC addresses of MRP test frames. Before forwarding a BPDU via the HSR network section with a modified destination MAC address, an assigned HSR Sequence Number will be stored together with the original destination MAC address of the BPDU. The HSR Sequence Number will then be used to drop duplicates of the BPDU forwarded via the HSR network section. Whenever a BPDU is received from the HSR network section at an HSR ring port of an endpoint device, the HSR Supervision reserved MAC address is converted back to the original destination MAC address of the BPDU before forwarding the BPDU to the RSTP or STP network section via the interlink port of the receiving endpoint device.

## Claims

1. Method of transmitting control frames according to a redundancy protocol, wherein
- the control frames are originally transmitted according to a first redundancy protocol which is employed for redundantly transmitting the control frames within a first network section (MRP1, MRP2, MRP3, MRP4, RSTP1, RSTP2),
- the control frames are transmitted between a first endpoint and a second endpoint via a second network section (HSR1) in which a second redundancy protocol is employed, wherein the first endpoint and the second endpoint interface the first network section and the second network section,
- the first endpoint and the second endpoint are both associated with a unique interconnection identifier,
- when receiving and detecting, at one of the endpoints, a control frame received from the first network section (MRP1, MRP2, MRP3, MRP4, RSTP1, RSTP2) and associated with the first redundancy protocol, a detecting endpoint device (201-206, 209-210) comprising the receiving endpoint assigns a destination address from a selected address range for forwarding the detected control frame through the second network section (HSR1), wherein the destination address is associated with the interconnection identifier, and wherein the selected address range is defined as reserved address range in the second redundancy protocol,
- the detected control frame is forwarded through the second network section (HSR1) by means of the destination address assigned by the detecting endpoint device (201-206, 209-210).

2. Method according to claim 1,
wherein the interconnection identifier and/or the assigned destination address are/is used for encoding and decoding the control frame when being forwarded through the second network section.

3. Method according to claim 2,
wherein the control frame is encoded by the detecting endpoint device before being forwarded through the second network section, and wherein the control frame is decoded by an endpoint device comprising the other of the first and the second endpoint after being forwarded through the second network section.

4. Method according to claim 1,
wherein the detecting endpoint device encapsulates the control frame in a tunneling frame transmitted via the second network section, and wherein an endpoint device comprising the other of the first and the second endpoint decapsulates the control frame from the tunneling frame.

5. Method according to claim 4,
wherein the first endpoint and the second endpoint are tunnel endpoints of a data link layer tunnel established via the second network section.

6. Method according to one of the claims 4 or 5,
wherein encapsulating and decapsulating the control frame is hardware-implemented by means of endpoint devices comprising the first endpoint or the second endpoint, respectively.

7. Method according to one of the claims 4 to 6,
wherein the tunneling frame is a VXLAN frame or a data frame for OSI Layer 2 tunneling of data frames.

8. Method according to one of the claims 1 to 7,
wherein the detecting endpoint device assigns the destination address to comprise a portion indicative of a specific type of the first redundancy protocol.

9. Method according to claim 8,
wherein an encoded or encapsulated control frame received by one of the first and the second endpoint via the second network section is selected for decoding or decapsulating based on the first redundancy protocol indicated by the destination address.

10. Method according to one of the claims 1 to 9,
wherein the detecting endpoint device assigns the destination address to comprise a portion indicative of the interconnection identifier.

11. Method according to one of the claims 1 to 10,
wherein the first redundancy protocol is a media redundancy protocol, particularly MRP, or a spanning tree protocol, particularly STP, RSTP, or MSTP, and wherein the second redundancy protocol is a seamless ring redundancy protocol, particularly HSR, a parallel redundancy protocol, particularly PRP, or a protocol for redundantly transmitting streams, particularly FRER.

12. Method according to claim 11,
wherein the first endpoint and the second endpoint are each associated with an interlink port of an HSR or PRP network device, particularly an HSR/PRP RedBox, and wherein control frames from the first network section are transparently tunneled through the second network section via the interlink ports, and wherein the control frames are MRP control frames or spanning tree Bridge Protocol Data Units, BPDUs.

13. Method according to one of the claims 11 or 12,
wherein the selected address range, from which the destination address is chosen by the detecting endpoint device, is reserved for monitoring purposes according to the second redundancy protocol.

14. Method according to one of the claims 11 to 13,
wherein source address tables associated with the first endpoint and the second endpoint are deleted or updated by means of topology change notifications from the first network segment.

15. Network device for transmitting control frames according to a redundancy protocol, wherein the network device is configured to
- comprise a first endpoint or a second endpoint interfacing a first network section (MRP1, MRP2, MRP3, MRP4, RSTP1, RSTP2) and a second network section (HSR1) and being associated with a unique interconnection identifier, wherein the control frames are originally transmitted according to a first redundancy protocol which is employed for redundantly transmitting the control frames within the first network section, and wherein the control frames are transmitted between the first endpoint and the second endpoint via the second network section in which a second redundancy protocol is employed,
- receive and detect, at one of the endpoints, a control frame received from the first network section (MRP1, MRP2, MRP3, MRP4, RSTP1, RSTP2) and associated with the first redundancy protocol,
- assign a destination address from a selected address range for forwarding the detected control frame through the second network section (HSR1), wherein the destination address is associated with the interconnection identifier, and wherein the selected address range is defined as reserved address range in the second redundancy protocol,
- forward the detected control frame through the second network (HSR1) section by means of the assigned destination address.

16. Network device according to claim 15,
wherein the network device comprises a switch functionality and/or HSR/PRP RedBox functionality.
